# EUROPEAN PATENT APPLICATION

(11) **EP 4 636 017 A1**
(43) Date of publication of application: **22.10.2025**
(21) Application number: 24177187.2
(22) Date of filing: 21.05.2024
(51) Int. Cl.: C08J 9/00, C08J 9/12, C08J 9/18, C08J 9/232, C08L 23/10

(54) **POLYPROPYLENE-BASED RESIN COMPOSITION, FOAM THEREOF, AND METHOD FOR MANUFACTURING THE FOAM**

(30) Priority: 17.04.2024 TW 113114348
(71) Applicant: Heyi International Packing Materials Co., Ltd., Taoyuan City 326 (TW)
(72) Inventor: CHU, Tien-Chu, 326 Taoyuan City (TW)
(74) Representative: Wittmann, Günther

(57) **Abstract**

Provided is a polypropylene-based resin composition, containing 100 parts by weight of polypropylene-based resin, 0.1 to 5 parts by weight of polymer nucleating agent, and 0 to 50 parts by weight of auxiliary agent. The polymer nucleating agent is incompatible with the polypropylene-based resin, and the melting point of the polymer nucleating agent is higher than that of the polypropylene-based resin. The foam of the polypropylene-based resin composition and the method for manufacturing the foam are also provided.

## Description

### FIELD OF THE INVENTION

The present invention relates to the technical field of foaming materials, and relates to a polypropylene-based resin composition, a foam of the polypropylene-based resin composition and a molded article thereof. Specifically, the foam of the polypropylene-based resin composition has high melting strength. The foam has good transport properties and easy to fill in the forming mold during the molding process. Therefore, it can be used to manufacture the precisive foamed articles.

### BACKGROUND OF THE INVENTION

Polypropylene foaming material has good application prospects in automobiles, packaging, toys, construction materials and other fields due to its excellent properties. Existed polypropylene foaming material usually uses inorganic particles such as talc, mica, kaolin, montmorillonite, and graphene as heterogeneous nucleating agents to increase the crystallization speed and improve the cell structure and mechanical properties of the foamed products. However, the dispersion of inorganic nucleating agents in polypropylene-based resin is not good, and agglomeration may occur easily. The foamed product has shortcomings such as uneven foam cells and unstable mechanical properties, which are not conducive to the manufacturing of precision components.

Additionally, polypropylene-based resins are usually combined with modifiers in a twin-screw process, and then water-cooled and granulated by traction to produce polypropylene particles, which are typically cylindrical particles with a particle size of 1 mm or more. The particle size of the polypropylene foam produced after foaming the polypropylene particles generally exceeds 2 mm. Since the particle size of polypropylene foam is easily uneven, it is not suitable for manufacturing precision components. Furthermore, the modified polypropylene-based resin with high viscosity and high melting strength is not suitable for using tractor pelletizing.

### SUMMARY OF THE INVENTION

In order to overcome the deficiencies in the prior art described above, the present invention provides a polypropylene-based resin composition, an expanded foaming bead of the polypropylene-based resin composition (polypropylene foam), and a molded article thereof..

In one aspect, the invention provides a polypropylene-based resin composition, comprising 100 parts by weight of polypropylene-based resin, 0.1 to 5 parts by weight of polymer nucleating agent, and 0 to 50 parts by weight of auxiliary agent; wherein the polymer nucleating agent is incompatible with the polypropylene-based resin, and a melting point of the polymer nucleating agent is higher than a melting point of the polypropylene-based resin.

In another aspect, the invention provides a method for manufacturing polypropylene foam, comprising the following steps:
mixing the polypropylene-based resin composition of claim 1 and adding the mixed composition to an extruder to obtain modified polypropylene particles through underwater pelletizing;
foaming the modified polypropylene particles through autoclave foaming to obtain foaming beads; and
molding the foaming beads by water vapor to obtain molded polypropylene foam.

In another aspect, the invention provides a polypropylene foam manufactured by the method for manufacturing polypropylene foam described above.

### BRIEF DESCRIPTION OF THE DRAWINGS

[Figure 1] is a photograph of the scanning electron microscope of the polypropylene foaming beads provided in the embodiment 1 of the present invention.
[Figure 2] is a photograph of the scanning electron microscope of the foaming material provided in the comparative embodiment 1 of the present invention.

### DETAILED DESCRIPTION OF THE INVENTION

The present invention uses a polymer nucleating agent as the foaming nucleating agent to increase the melting strength of the polypropylene-based resin, increase the foam cell density of the foaming beads, and increase the performance of the molded body. Furthermore, the modification and pelletizing process of the polypropylene-based resin adopt underwater pelletization. When the polypropylene-based resin composition is in a melting state, it is cut into particles and solidified into spherical particles by water cooling. By controlling the diameter of the holes in the moldboard of the granulator, uniform spherical particles with a particle size of less than 0.5 mm can be produced. After foaming the particles, spherical foaming beads with small particles and good transport properties are obtained, and they are suitable for manufacturing the precisive components.

In one aspect, the invention provides a polypropylene-based resin composition, comprising 100 parts by weight of polypropylene-based resin, 0.1 to 5 parts by weight of polymer nucleating agent, and 0 to 50 parts by weight of auxiliary agent; wherein the polymer nucleating agent is incompatible with the polypropylene-based resin, and a melting point of the polymer nucleating agent is higher than a melting point of the polypropylene-based resin.

In some embodiments, the polypropylene-based resin is random polypropylene copolymer.

In some embodiments, the polymer nucleating agent has a particle size less than 0.1 mm, and the polymer nucleating agent is selected from the group consisting of polytetrafluoroethylene (PTFE), polyethylene terephthalate (PET), nylon 6, nylon 66, or combinations thereof.

In some embodiments, the auxiliary agent is at least one of antioxidant, anti-UV and anti-aging agent, color masterbatch, flame retardant, and antistatic agent.

In some embodiments, the content of the polymer nucleating agent is around 0.1 to around 5 parts by weight, preferably is, but is not limited to, around 0.1, around 0.5, around 1.5, around 2, around 2.5, around 3, around 3.5, around 4, around 4.5, around 5 parts by weight, or any parts by weight between around 0.1 and around 5, such as around 0.69, around 2.81, or around 4.37 parts by weight.

In some embodiments, the content of the auxiliary agent is 0 to around 50 parts by weight of, preferably is, but is not limited to, 0, around 0.1, around 0.5, around 1, around 1.5, around 2.5, around 5, around 7.5, around 10, around 15, around 20, around 25, around 30, around 35, around 40, around 45, around 50 parts by weight, or any parts by weight between 0 and around 50, such as around 0.34, around 7.28, or around 31.96 parts by weight.

In some embodiments, the melting point of the polypropylene-based resin is around 130°C to around 160°C, preferably is, but is not limited to, around 130°C, around 135°C, around 140°C, around 145°C, around 150°C, around 155°C, around 160°C, or any temperature between around 130°C and around 160°C, such as, around 139.51°C, around 142.38°C, or around 159.99°C.

In some embodiments, the melting point of the polymer nucleating agent is around 180°C to around 350°C, preferably is, but is not limited to, around 180°C, around 190°C, around 200°C, around 210°C, around 220°C, around 230°C, around 240°C, around 250°C, around 260°C, around 270°C, around 280°C, around 290°C, around 300°C, around 310°C, around 320°C, around 330°C, around 340°C, around 350°C, or any temperature between around 180°C and around 350°C, such as around 196.11°C, around 227.34°C, or around 318.73°C.

In another aspect, the invention provides a method for manufacturing polypropylene foam, comprising the following steps:
mixing the polypropylene-based resin composition of claim 1 and adding the mixed composition to an extruder to obtain modified polypropylene particles through underwater pelletizing;
foaming the modified polypropylene particles through autoclave foaming to obtain foaming beads; and
molding the foaming beads by water vapor to obtain molded polypropylene foam.

In some embodiments, the autoclave foaming uses carbon dioxide as a foaming agent.

In some embodiments, the autoclave foaming is performed at a temperature of ±2°C of the melting point of the polypropylene-based resin.

In some embodiments, the autoclave foaming is performed at a pressure of around 2.0 to around 5.0 MPa, preferably is, but is not limited to, around 2.0, around 2.5, around 3, around 3.5, around 4, around 4.5, around 5.0 MPa, or any pressure between around 2.0 MPa and around 5.0 MPa, such as 2.36 MPa, 3.74 MPa, or 4.18 MPa.

In some embodiments, the modified polypropylene particles are spheres with a diameter of 0.3 to 1.0 mm, preferably is, but is not limited to, around 0.3, around 0.4, around 0.5, around 0.6, around 0.7, around 0.8, around 0.9, around 1.0 mm, or any diameter between around 0.3 and around 1.0 mm, such as 0.471 mm, 0.618 mm, or 0.829 mm.

In some embodiments, the modified polypropylene particles have a density of 0.03∼0.09 g/cm³, preferably is, but is not limited to, around 0.03, around 0.04, around 0.05, around 0.06, around 0.07, around 0.08, around 0.09 g/cm³, or any density between around 0.03 to around 0.09 g/cm³, such as 0.0312 g/cm³, 0.0651 g/cm³, or 0.0839 g/cm³.

In another aspect, the invention provides a polypropylene foam manufactured by the method for manufacturing polypropylene foam described above.

In some embodiments, the polypropylene foam has the following characteristics: an average foam cell size of 10 µm to 120 µm, preferably is, but is not limited to, around 10 µm, around 20 µm, around 30 µm, around 40 µm, around 50 µm, around 60 µm, around 70 µm, around 80 µm, around 90 µm, around 100 µm, around 110 µm, around 120 µm, or any size between around 10 µm and around 120 µm, such as around 37.25 µm, around 96.53 µm, or around 104.69 µm.

In some embodiments, the polypropylene foam has the following characteristics: a foam cell density of 10⁸~10¹³ cells/cm³, preferably is, but is not limited to, around 10⁸, around 10⁹, around 10¹⁰, around 10¹¹, around 10¹², around 10¹³ cells/cm³, or any density between around 10⁸ and around 10¹³ cells/cm³, such as around 2.89 × 10⁹ cells/cm³, around 6.27 × 10¹⁰ cells/cm³, or around 4.38 × 10¹¹ cells/cm³.

In some embodiments, the polypropylene foam has the following characteristics: a tensile strength of 0.4∼1.2 MPa, preferably is, but is not limited to, around 0.4, around 0.5, around 0.6, around 0.7, around 0.8, around 0.9, around 1.0, around 1.1, around 1.2 MPa, or any strength between around 0.4 and around 1.2 MPa, such as around 0.689 MPa, around 0.876 MPa, or around 1.143 MPa.

Unless otherwise defined herein, scientific and technical terms used in connection with the present disclosure shall have the meanings that are commonly understood by those of ordinary skill in the art.

As used herein, the singular form "a", "an", and "the" includes plural references unless indicated otherwise. For example, "an" excipient includes one or more excipients.

As used interchangeably herein, "around", "about" and "approximately" shall generally mean plus or minus 10% of the numerical value of the number with which it is being used. Therefore, about 1% means in the range of 0.9% to 1.1 %. Numerical quantities given herein are approximate, meaning that the term "around", "about" or "approximately" can be inferred if not expressly stated.

As used herein, the phrase "comprising" is open-ended, indicating that such embodiments may include additional elements. In contrast, the phrase "consisting of" is closed, indicating that such embodiments do not include additional elements (except for trace impurities). The phrase "consisting essentially of" is partially closed, indicating that such embodiments may further comprise elements that do not materially change the basic characteristics of such embodiments.

Where applicants have defined an invention or a portion thereof with an open-ended term such as "comprising," it should be readily understood that (unless otherwise stated) the description should be interpreted to also describe such an invention using the terms "consisting essentially of' or "consisting of."

These and other aspects will become apparent from the following description of the preferred embodiment taken in conjunction with the following drawings.

Unless otherwise specified, the raw materials in the embodiments of this application are purchased commercially. Unless otherwise specified, the test methods are conventional, and the instrument settings are based on the recommendation of the manufacturer.

Among them, the polypropylene-based resin 1 is purchased from Sinopec Shanghai Petrochemical Co, Ltd., model F800E, melting point 149 °C. The polypropylene-based resin 2 is purchased from LOTTE Chemical Company, Seoul, South Korea), model SFC-750, melting point 135 °C.

Among them, the bulk density test: the mass of foaming beads falling naturally into a 1L measuring cylinder.

Density test: The density of polypropylene foaming board is measured by the drainage method, and the density analyzing instrument is the density balance model BT224S from Beijing Sartorius Scientific Instruments Company.

Foam cell structure analysis: Test and analyze are performed by the scanning electron microscope (SEM). The analyzing instrument is a desktop scanning electron microscope TM1000 from Hitachi Company, Japan. The analysis method is to analyze the cross section of the manufactured foaming sample.

Mechanical property test: According to GB1040-2006, the Instron5567 universal material testing machine is used to test the tensile properties of the material.

### Embodiment 1

S1: Mix 100 parts by weight of polypropylene-based resin and 1 part by weight of polytetrafluoroethylene powder with an average particle size of 10 µm through a high-speed mixer, add them to a twin-screw extruder, pass them through an underwater pelletization system, and manufacture the modified polypropylene particles with a particle size of 0.5 mm. The melting point of the polypropylene-based resin 1 is 149 °C, and the melting point of the polytetrafluoroethylene powder is 180 °C, 190 °C, 200°C, 210 °C, 220 °C, 230 °C, 240 °C, 250 °C, 260 °C, 270 °C, 280 °C, 290 °C, 300 °C, 310 °C, 320 °C, 330 °C, 340 °C or 350 °C, preferably 327 °C.

S2: Take 5 kg of modified polypropylene particles prepared in S1 into the autoclave, pass through 2 MPa carbon dioxide, heat to 151 °C, perform the pressure relief and drying, and obtain the polypropylene foaming beads with a bulk density of 60 g/L, average cell diameter of 50 µm, and cell density of 2.4*10¹⁰ cells/cm³.

S3: The foaming beads are pressure-loaded, and then molded by water vapor to obtain a foaming molded body with a density of molded body of 0.06 g/cm³ and a tensile strength of 0.92 MPa.

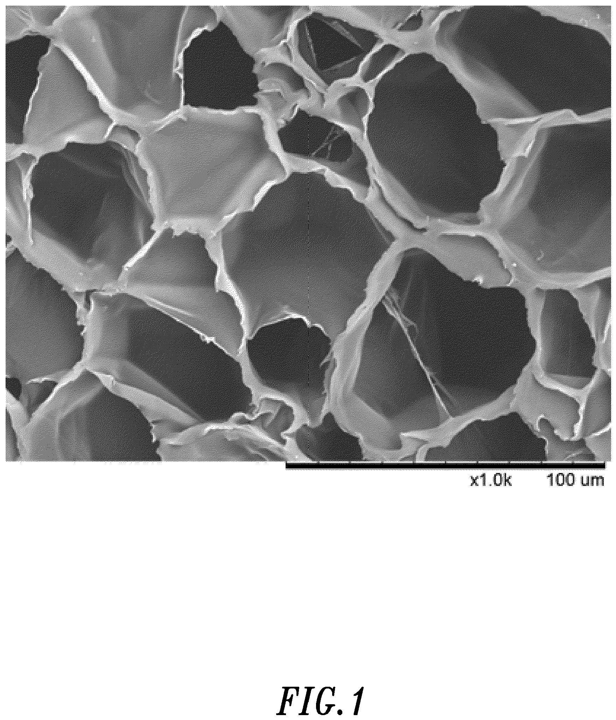

Figure 1 is a schematic diagram of the scanning electron microscope of the foaming beads in the embodiment 1. The filamentous structure in the figure is the fiber state of the polymer nucleating agent in the cells.

### Embodiment 2

S1: Mix 100 parts by weight of polypropylene-based resin, 5 parts by weight of polyethylene terephthalate powder with an average particle size of 5 µm, and 5 parts by weight of black masterbatch through a high-speed mixer, add them to a twin-screw extruder, pass them through an underwater pelletization system, and manufacture the modified polypropylene particles with a particle size of 1 mm. The melting point of the polypropylene-based resin 1 is 149 °C, and the melting point of the polyethylene terephthalate powder is 180 °C, 190 °C, 200°C, 210 °C, 220 °C, 230 °C, 240 °C, 250 °C, 260 °C, 270 °C, 280 °C, 290 °C, 300 °C, 310 °C, 320 °C, 330 °C, 340 °C or 350 °C, preferably 250-260 °C.

S2: Take 5 kg of modified polypropylene particles prepared in S1 into the autoclave, pass through 5 MPa carbon dioxide, heat to 151.5 °C, perform the pressure relief and drying, and obtain the polypropylene foaming beads with a bulk density of 30 g/L, average cell diameter of 100 µm, and cell density of 4.9*10⁸ cells/cm³.

S3: The foaming beads are pressure-loaded, and then molded by water vapor to obtain a foaming molded body with a density of molded body of 0.03 g/cm³ and a tensile strength of 0.48 MPa.

### Embodiment 3

S1: Mix 100 parts by weight of polypropylene-based resin 2 and 1 part by weight of polytetrafluoroethylene powder with an average particle size of 10 µm through a high-speed mixer, add them to a twin-screw extruder, pass them through an underwater pelletization system, and manufacture the modified polypropylene particles with a particle size of 0.5 mm. The melting point of the polypropylene-based resin 2 is 135 °C, and the melting point of the polytetrafluoroethylene powder is 180 °C, 190 °C, 200 °C, 210 °C, 220 °C, 230 °C, 240 °C, 250 °C, 260 °C, 270 °C, 280 °C, 290 °C, 300 °C, 310 °C, 320 °C, 330 °C, 340 °C or 350 °C, preferably 327 °C.

S2: Take 5 kg of modified polypropylene particles prepared in S1 into the autoclave, pass through 2 MPa carbon dioxide, heat to 136 °C, perform the pressure relief and drying, and obtain the polypropylene foaming beads with a bulk density of 50 g/L, average cell diameter of 40 µm, and cell density of 6.3*10¹⁰ cells/cm³.

S3: The foaming beads are pressure-loaded, and then molded by water vapor to obtain a foaming molded body with a density of molded body of 0.05 g/cm³ and a tensile strength of 0.73 MPa.

### Embodiment 4

S1: Mix 100 parts by weight of polypropylene-based resin 2 and 5 part by weight of polytetrafluoroethylene powder with an average particle size of 10 µm through a high-speed mixer, add them to a twin-screw extruder, pass them through an underwater pelletization system, and manufacture the modified polypropylene particles with a particle size of 0.3 mm. The melting point of the polypropylene-based resin 2 is 135 °C, and the melting point of the polytetrafluoroethylene powder is 180 °C, 190 °C, 200 °C, 210 °C, 220 °C °C, 230 °C, 240 °C, 250 °C, 260 °C, 270 °C, 280 °C, 290 °C, 300 °C, 310 °C, 320 °C, 330 °C, 340 °C or 350 °C, preferably 327 °C.

S2: Take 5 kg of modified polypropylene particles prepared in S1 into the autoclave, pass through 3 MPa carbon dioxide, heat to 137 °C, perform the pressure relief and drying, and obtain the polypropylene foaming beads with a bulk density of 35 g/L, average cell diameter of 90 µm, and cell density of 6.3*10¹⁰ cells/cm³.

S3: The foaming beads are pressure-loaded, and then molded by water vapor to obtain a foaming molded body with a density of molded body of 0.035 g/cm³ and a tensile strength of 0.55 MPa.

### Embodiment 5

S1: Mix 100 parts by weight of polypropylene-based resin 1 and 0.1 part by weight of nylon 66 powder with an average particle size of 10 µm through a high-speed mixer, add them to a twin-screw extruder, pass them through an underwater pelletization system, and manufacture the modified polypropylene particles with a particle size of 1 mm. The melting point of the polypropylene-based resin 1 was 149 °C, and the melting point of the nylon 66 powder is 180 °C, 190 °C, 200°C, 210 ° C, 220 °C, 230 °C, 240 °C, 250 °C, 260 °C, 270 °C, 280 °C, 290 °C, 300 °C, 310 °C, 320 °C, 330 °C, 340 °C or 350 °C, preferably 252 °C.

S2: Take 5 kg of modified polypropylene particles prepared in S1 into the autoclave, pass through 2 MPa carbon dioxide, heat to 151 °C, perform the pressure relief and drying, and obtain the polypropylene foaming beads with a bulk density of 60 g/L, average cell diameter of 65 µm, and cell density of 5.9*10⁹ cells/cm³.

S3: The foaming beads are pressure-loaded, and then molded by water vapor to obtain a foaming molded body with a density of molded body of 0.06 g/cm³ and a tensile strength of 0.90 MPa.

### Comparative Embodiment 1

S1: Mix 100 parts by weight of polypropylene-based resin 1 and 1 part by weight of 1500-mesh talc powder through a high-speed mixer, add them to a twin-screw extruder, perform traction and water-cooling pelletization, and obtain long particles with a diameter of 1 mm and a length of 1.5 mm.

S2: Take 5 kg of the particles prepared in S1 into the autoclave, pass through 2 MPa carbon dioxide, heat to 151 °C, perform the pressure relief and drying, and obtain the polypropylene foaming beads with a bulk density of 60 g/L, average cell diameter of 150 µm, and cell density of 5.1*10⁷ cells/cm³.

S3: The foaming beads are pressure-loaded, and then molded by water vapor to obtain a foaming molded body with a density of molded body of 0.06 g/cm³ and a tensile strength of 0.87 MPa.

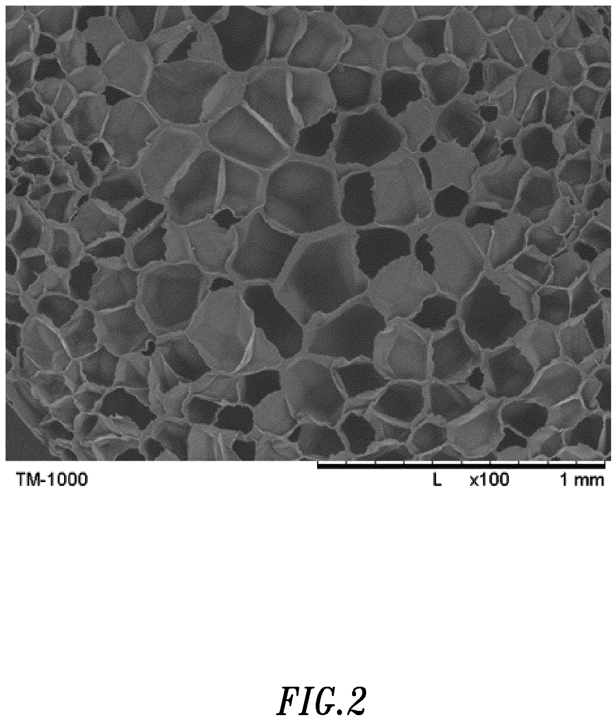

Figure 2 is a photograph of the scanning electron microscope of the cross-section of the foaming beads in the comparative embodiment 1. The uniformity of cell size is poor, and the cell size has a wide distribution of 50-300 µm.

### Comparative Embodiment 2

S1: Mix 100 parts by weight of polypropylene-based resin 1 and 1 part by weight of polytetrafluoroethylene powder with an average particle size of 10 µm through a high-speed mixer, add them to a twin-screw extruder, and perform traction and water-cooling pelletization. Because of the excessive strength of the melting body, it is easy to break in the traction process, and it is not easy to be coarse or fine. Accordingly, it is impossible to produce continuously, and the yield rate is low.

Based on the foregoing, the polypropylene-based resin that can be used in the present invention is random polypropylene copolymer. The polymer nucleating agent and the polypropylene-based resin are incompatible polymers. The melting point of the polymer nucleating agent is higher than that of the polypropylene-based resin. During the extrusion process of twin-screw extruder, deformation and orientation occurs through the heating and shearing of the screw, and a micron or nano-scale fiber structure with a high aspect ratio is formed, which provides a large amount of nucleation sites for the polymer-based crystallization. It not only improves the crystallization ability of the polypropylene-based resin, but also improves the melting strength of the body through the physical entanglement of the fibers. Ultimately, the foamed products with smaller and more uniform cell sizes and stronger mechanical properties can be obtained.

Compared with the prior art, the beneficial effects of the present invention include:
1. The polymer nucleating agent not only provides the effect of heterogeneous nucleation, but also appears in the polypropylene-based resin in the form of micron or nanofiber structures, which provides more crystalline heterogeneous nucleation sites for the polypropylene-based resin, accelerates the crystallization speed of polypropylene, and results in more uniform cell structures and higher cell density.
2. The fiber structure formed by the polymer nucleating agent is physically entangled with the polypropylene-based resin, to improve the melting strength of the polypropylene-based resin and thereby improve the mechanical properties of the foamed products.
3. Utilize the manufacturing process of underwater pelletization to obtain modified particles with smaller particles and spherical structures. After foaming, the foaming beads have better fluidity and are suitable for the manufacturing of foaming molded bodies with precise structures. The density of spherical modified polypropylene particles is 0.03∼0.09 g/cm³, the average foam cell size is 10-120 µm, the cell density is 10⁸~10¹³ cells/cm³, and the tensile strength is 0.4∼1.2 MPa.

The above disclosed embodiments are merely some of the preferred embodiments of the present invention, which are not intended to limit the present invention. In the embodiments of the present invention, some of the details disclosed in the embodiments are necessary for the publication and clarity of the specification. It should be understood by those skilled in the art that these details are not necessary and should not be used to limit the invention. Any person of ordinary knowledge in the art may make certain changes and modifications in understanding the foregoing technical features and embodiments of the present invention without departing from the spirit and scope of the present invention. Accordingly, the scope of patent protection for the present invention shall be as defined in the claim attached hereto.

## Claims

1. A polypropylene-based resin composition, comprising
100 parts by weight of polypropylene-based resin;
0.1 to 5 parts by weight of polymer nucleating agent, wherein the polymer nucleating agent is incompatible with the polypropylene-based resin, and a melting point of the polymer nucleating agent is higher than a melting point of the polypropylene-based resin; and
0 to 50 parts by weight of auxiliary agent.

2. The polypropylene-based resin composition of claim 1, wherein the polymer nucleating agent has a particle size less than 0.1 mm, and the polymer nucleating agent is selected from the group consisting of polytetrafluoroethylene (PTFE), polyethylene terephthalate (PETE), nylon 6, nylon 66, or combinations thereof.

3. The polypropylene-based resin composition of claim 1, wherein the melting point of the polypropylene-based resin is 130-160°C, and the melting point of the polymer nucleating agent is 180-3 50°C.

4. The polypropylene-based resin composition of claim 1, wherein the auxiliary agent is at least one of antioxidant, anti-UV and anti-aging agent, color masterbatch, flame retardant, and antistatic agent.

5. A method for manufacturing polypropylene foam, comprising the following steps:
mixing the polypropylene-based resin composition of claim 1 and adding the mixed composition to an extruder to obtain modified polypropylene particles through underwater pelletizing;
foaming the modified polypropylene particles through autoclave foaming to obtain foaming beads; and
molding the foaming beads by water vapor to obtain molded polypropylene foam.

6. The method of claim 5, wherein the autoclave foaming uses carbon dioxide as a foaming agent.

7. The method of claim 5, wherein the autoclave foaming is performed at a temperature of ±2°C of the melting point of the polypropylene-based resin and a pressure of 2.0∼5.0 MPa.

8. The method of claim 5, wherein the modified polypropylene particles are spheres with a diameter of 0.3 to 1.0 mm.

9. The method of claim 5, wherein the modified polypropylene particles have a density of 0.03~0.09 g/cm³.

10. A polypropylene foam manufactured by the method of claim 5, wherein the polypropylene foam has the following characteristics:
an average foam cell size of 10∼120 µm;
a foam cell density of 10⁸~10¹³ cells/cm³; and
a tensile strength of 0.4∼1.2 MPa.
